# EUROPÄISCHE PATENTSCHRIFT

(11) **EP 4 456 341 B1**
(45) Veröffentlichungstag und Bekanntmachung des Hinweises auf die Patenterteilung: **27.05.2026**
(21) Anmeldenummer: 23020198.0
(22) Anmeldetag: 27.04.2023
(51) Int. Cl.: H01R 43/052

(54) **VORRICHTUNG, ANLAGE UND VERFAHREN ZUM ZUFÜHREN EINER ELEKTRISCHEN LEITUNG**
DEVICE, INSTALLATION AND METHOD FOR FEEDING AN ELECTRICAL LINE
DISPOSITIF, INSTALLATION ET PROCÉDÉ D'ALIMENTATION D'UNE LIGNE ÉLECTRIQUE

(43) Veröffentlichungstag der Anmeldung: 30.10.2024
(73) Patentinhaber: RoboWire GmbH, 9430 St. Margrethen (CH)
(72) Erfinder: Jahn, Deborah, 8200 Schaffhausen (CH); Herzog, Sascha David, 9443 Widnau (CH)
(74) Vertreter: Jendricke, Susann

(56) Entgegenhaltungen:
- US-A1- 2005 050 713
- US-A1- 2017 129 709

## Beschreibung

Die vorliegende Erfindung betrifft eine Vorrichtung, eine Anlage und ein Verfahren zum Zuführen einer elektrischen Leitung von einer Entnahmestation zu mindestens einer Zielstation, wobei ein verfahrbarer Roboter mit einem Werkzeug zur Aufnahme der elektrischen Leitung vorgesehen ist und wobei die elektrische Leitung mittels des Roboters zur Zielstation verbringbar ist.

Kabel, Drähte, Litzen, Koaxialkabel, EMV-Leitungen sind metallische elektrische Leiter und werden für verschiedene Anwendungszwecke mit elektrischen Bauteilen, wie Steckern, Steckerstifte, Krokodilsklemmen, Aderendhülsen, konfektioniert. Zuvor werden die elektrischen Leiter abisoliert und es wird - zumeist in einer für sich bekannten Crimpstation - eine unlösbare mechanische und elektrische Verbindung zwischen dem elektrotechnischen Bauteil und der abisolierten elektrischen Leitung hergestellt. Zudem erfolgt ein Ablängen der elektrischen Leitung durch Abschneiden je nach Erfordernis.

Die Druckschrift DE 102021101497 A1 zeigt ein Kabelverarbeitungscenter, welches die Aufgabe löst, eine weitgehend automatische Kabelkonfektion zu ermöglichen. Dazu sind auf einem einzigen Rundtisch mehrere separat ansteuerbare Arbeitsmodule angeordnet. Ein stationärer, aber auch verfahrbar ausgestalteter Roboter entnimmt einem Lager einen Kabelrohling und bringt diese zur jeweiligen Arbeitsstation. Wie der auch als Handlingsgerät bezeichnete Roboter ausgestaltet ist, bleibt offen. Der Roboter soll entnehmen und übergeben können, konstruktive Merkmale zur Umsetzung der Funktionsangaben sind in DE 102021101497A1 nicht offenbart. Es ist von einem üblichen Greifer mit den üblichen Schwächen der Greiffinger bei der Positionierung in Bezug auf die Arbeitsstationen auszugehen.

Ein Roboter mit einem Reparaturwerkzeug für elektrische Leitungen ergibt sich beispielsweise aus der Druckschrift CN 108767736 B.

Eine Kabeltransporteinheit mit Rollen oder Bändern ist aus der Druckschrift EP 0864524 B1 bekannt. Es soll ein präziser Vorschub des Kabels unter Einsatz federelastischer Mittel ermöglicht werden.

Ausgehend vom gattungsbildenden Stand der Technik gemäß DE 102021101497 A1 liegt der Erfindung die Aufgabe zugrunde, eine Vorrichtung, eine Anlage und ein Verfahren der in Rede stehenden Art anzugeben, wobei die elektrische Leitung den ausgewählten Zielstationen präzise zugeführt wird. Bezüglich der Anlage soll darüber hinaus - im entsprechenden Anwendungsfall - auch die Entnahme optimiert werden.

Die voranstehende Aufgabe wird im Hinblick auf die Vorrichtung durch die Merkmale des Patentanspruches 1 gelöst. Danach ist eine Vorrichtung der in Rede stehenden Art derart ausgestaltet und weitergebildet, dass das Werkzeug eine Halte- und Transporteinrichtung und eine Zentriereinrichtung für die elektrische Leitung umfasst.

Die voranstehende Aufgabe wird im Hinblick auf die Anlage durch die Merkmale des Patentanspruches 10 gelöst. Danach ist eine Anlage der in Rede stehenden Art derart ausgestaltet und weitergebildet, dass zumindest die Zielstation auf das Werkzeug des Roboters abgestimmt ist und mit diesem interagiert.

Die voranstehende weiterführende Aufgabe wird in Bezug auf das Verfahren, durch die Merkmale des Patentanspruches 16 gelöst. Danach ist das Verfahren der in Rede stehenden Art derart ausgestaltet und weitergebildet, dass die elektrische Leitung im Werkzeug derart gehalten, transportiert und zentriert wird, dass die elektrische Leitung positionsgenau auf die Zielstation trifft und an diese übergeben wird.

Ausgehend vom Kabelverarbeitungscenter gemäß DE 10 2021 101 497 A1 ist zunächst positiv erkannt worden, dass der dortige verfahrbare Roboter zu verschiedenen Arbeitsmodulen fahren kann. Allerdings ist es zwingend notwendig, dass alle Arbeitsmodule auf einem einzigen Rundtisch angeordnet sind. Als nachteilig wurde erkannt, dass der Roboter zwar ein Werkzeug aufweist, das Entnahme- und Übergabevorgänge realisieren kann, jedoch erschöpft sich die durch die Beschreibung entwickelte Vorstellungswelt in einer Greifvorrichtung. Wie das Werkzeug des Roboters ausgestaltet sein könnte, ist der in Rede stehenden gattungsbildenden Druckschrift jedenfalls nicht zu entnehmen.

Erfindungsgemäß ist im Hinblick auf die Vorrichtung erkannt worden, das Werkzeug des Roboters mit einer Halte- und Transporteinrichtung und einer Zentriereinrichtung für die elektrische Leitung auszustatten. Im Hinblick auf das Verfahren ist erfindungsgemäß erkannt worden, die elektrische Leitung im Werkzeug derart zu halten, zu transportieren und zu zentrieren, dass die elektrische Leitung positionsgenau auf die Zielstation trifft und an diese übergeben wird. Die Zuführung der elektrischen Leitung über den Roboter zur Zielstation startet mit einer aus einer Entnahmestation kommenden elektrischen Leitung, wobei die Entnahmestation eine Ablängstation oder ein Speicher für bereits vorbearbeitete, insbesondere abgelängte, Leitungen sein kann. Erfindungsgemäß ist erkannt worden, dass durch die Halte- und Transporteinrichtung die Förderung der elektrischen Leitung im Werkzeug des Roboters ermöglicht wird. Hierdurch kann bestimmt werden, wie sich die Leitung der Zielstation nähert. Außerdem ist erfindungsgemäß erkannt worden, dass die Präzision der Zuführung der elektrischen Leitung, die gerade im Hinblick auf die Übergabe an die Zielstationen erforderlich ist, dadurch erreicht werden kann, dass eine Zentriereinrichtung vorgesehen ist.

Erfindungsgemäß ist im Hinblick auf die Anlage erkannt worden, die Zielstation - und im entsprechenden Anwendungsfall auch die Entnahmestation - auf das Werkzeug des Roboters abzustimmen und die Interaktion mit diesem zu realisieren. Die Idee der Einbeziehung der verschiedenen nach Wahl angeordneten Stationen und die Abstimmung der Anlagenkomponenten aufeinander, sei es im Hinblick auf die Gleichschaltung von Transportgeschwindigkeiten oder die Positionsoptimierung in Bezug auf die Zielstation durch Abstimmung und Interaktion gewährleistet die Präzision der Zuführung der elektrischen Leitung zur Zielstation und stellt eine grundsätzliche alternative Lösung der Aufgabe dar. Die Umsetzung der erfindungsgemäßen Anlagenmerkmale kann im weiteren auf die Merkmale der erfindungsgemäßen Vorrichtung und auf die Merkmale des erfindungsgemäßen Verfahrens zurückgreifen.

Die Entnahme aus der Entnahmestation, die Einführung in die Zielstation und auch Rückführung aus der Zielstation könnte über die Halte- und Transporteinrichtung realisiert werden, in der die Leitung entsprechend der erforderlichen Transportrichtung gewählt wird. Ein Vorschub und ein Rückschub könnten über mindestens einen Antrieb der Halte- und Transporteinrichtung erfolgen.

Die Halte- und Transporteinrichtung könnte zumindest ein Transportbandpaar umfassen, wobei die Transportbänder des Transportbandpaares gegenüberliegend angeordnet sind und wobei zwischen den Transportbändern die elektrische Leitung transportierbar ist. Jedem Transportband könnte ein Antrieb zugeordnet sein, die entsprechend von Vorgaben mittels einer Steuerung ansteuerbar sind. Im Hinblick auf einen stabilen Transportweg könnten auch zwei Transportbandpaare hintereinandergeschaltet werden.

Gemäß einer besonders bevorzugten Ausführungsform, die die Handhabung beider Enden der elektrischen Leitung in kurzer Zeit ermöglicht, könnte das Werkzeug mit der Halte- und Transporteinrichtung und der Zentriereinrichtung um mindestens eine Achse drehbar sein, um sowohl das erste Ende einer bereits abgelängten elektrischen Leitung als auch deren zweites Ende nacheinander in Position zur Zielstation zu bringen. Der Winkel, um den gedreht wird, könnte 180° betragen, insbesondere dann, wenn die Transportbandpaare axial aufeinanderfolgend angeordnet sind. Die konstruktive Umsetzung der Drehung könnte durch einen Ausleger am Roboter bewerkstelligt werden, an dessen freien Ende das Werkzeug angeordnet ist. Die Drehung des Werkzeuges über den Roboter und der Transport der Leitung innerhalb des Werkzeuges vermeidet Umgreifen oder neues Ergreifen der Leitung. Sie bleibt im Werkzeug, wird dort zentriert, gehalten und transportiert und kann durch den Roboter und dessen Ausleger flexibel positioniert werden.

Wenn die elektrische Leitung in der Zielstation mit Kontaktbauteilen verbunden wird, ob an einem Ende oder an beiden Enden, ist die Konfektionierung abgeschlossen und der Roboter könnte eine nächste Zielstation, bspw. eine Steckerbatterie, anfahren und dort die Montage vornehmen. Auch hier könnte die Drehung des Werkzeuges entsprechend der Montagerichtung vor Ort erfolgen. Die Freigabe der konfektionierten elektrischen Leitung könnte dadurch erfolgen, dass die Halte- und Transporteinrichtung und die Zentriereinrichtung von einer Betriebsstellung reversibel in eine Offenstellung verbringbar sind. Die Offen - bzw. Betriebsstellung könnte durch eine geteilte Halte- und Transporteinrichtung und eine geteilte Zentriereinrichtung realisiert werden. Dabei wird es bevorzugt, wenn die Teile der Halte- und Transporteinrichtung und der Zentriereinrichtung gemeinsam auseinandergeschoben werden. In der Regel werden die Transportbandpaare ebenso wie die Zentriereinrichtung und deren Führungsabschnitte genau hälftig zu beiden Seiten eine Längsachse getrennt, die mit der Mittelachse der elektrischen Leitung übereinstimmt. Zur Öffnung und Schließung des Werkzeuges könnte ein pneumatischer oder elektrischer Antrieb vorgesehen sein.

In besonders vorteilhafter Weise im Hinblick auf die Anpassung des Werkzeuges, bzw. der Halte- und Transporteinrichtung und der Zentriereinrichtung an unterschiedliche Leitungsquerschnitte könnte die Zentriereinrichtung reversibel am Werkzeug angeordnet sein. Zur besonders schnellen und einfachen Verbindbarkeit und Lösbarkeit wird eine magnetische Verbindung zwischen der Zentriereinrichtung und dem Werkzeug bevorzugt. Die Geschwindigkeit des Wechsels der Zentriereinrichtung wird dadurch enorm erhöht. Die Anlage könnte einen Speicher umfassen, der eine Vielzahl von verschiedenen Zentriereinrichtungen enthält. Die verschiedenen Zentriereinrichtungen könnten ebenfalls magnetisch an einer magnetischen Speicher-Trägerplatte haften oder anderweitig in Vertiefungen einer Speicher-Trägerplatte eingreifen oder umgekehrt.

Gemäß einer bevorzugten Ausführungsform könnte die Zentriereinrichtung mindestens einen Führungsabschnitt aufweisen, der auf den Querschnitt der elektrischen Leitung abgestimmt ist und zusammen mit der Zentriereinrichtung in eine Offen- und Betriebsstellung verbringbar ist. Besonders vorteilhaft im Hinblick auf den gewünschten Wechsel der Zentriereinrichtung könnte diese solange mit dem Werkzeug lösbar verbunden sein, solange sich der aktuelle Leitungsquerschnitt nicht ändert. Der konstruktive Aufbau einer bevorzugten zweiteiligen Zentriereinrichtung könnte je ein plattenförmiges Bauteil umfassen, an dem je ein halber Führungsabschnitt angeordnet ist, wobei sich die Teile des Führungsabschnittes in Betriebsstellung zum kompletten Führungsabschnitt ergänzen. Die Zentriereinrichtung könnte in der Offenstellung des Werkzeuges montiert werden.

Wenn die Halte- und Transporteinrichtung mehrere hintereinandergeschaltete Transportbandpaare umfasst, könnten mehrere Führungsabschnitte vorgesehen sein. Bei einem Transportbandpaar könnte je ein Führungsabschnitt vor- und nachgeordnet sein. Bei zwei Transportbandpaaren wurde als vorteilhaft herausgefunden, eine Zentriereinrichtung mit drei Führungsabschnitten vorzusehen. Dabei könnten die endseitigen Führungsabschnitte in axialer Richtung geringere Abmessungen aufweisen als der mittlere Führungsabschnitt. Der mittlere Führungsabschnitt könnte sich in vorteilhafter Weise über den gesamten Abstand zwischen den beiden Transportbandpaaren erstrecken. Die Ausbildung einer geschlossenen, sich über das ganze Werkzeug erstreckenden Führung ist vorteilhaft im Hnblick auf die Vermeidung jeglicher Abweichung der Leitung. Je nach Bauart und Leitungsquerschnitt könnten weitere Ausgestaltungen der Führungsabschnitte relevant sein. Der Führungsabschnitt könnte aus Kunststoff gefertigt sein und eine nutförmige Ausfräsung aufweisen, in der die elektrische Leitung transportiert wird. Dabei ist zu beachten, dass die Ausfräsung pro Führungsabschnittshälte in der Summe den Querschnitt der zu führenden Leitung ausmacht. Je nach Transportrichtung der elektrischen Leitung ist bei dem vorliegenden Ausführungsbeispiel sichergestellt, dass die zur Zielstation verbrachte Leitung stets aus dem Führungsabschnitt der Zentriereinrichtung austritt, also zentriert bspw. auf die Abisolierstation oder auf die Crimpstation trifft. Die geschlossene Führung in den Führungsabschnitten und in den Transportbandpaaren stabilisiert und sichert den Transport.

Die Zentriereinrichtung könnte in vorteilhafter Weise dadurch weitergebildet sein, dass sie mindestens einen Führungsfinger umfasst, der vorzugsweise vom Werkzeug abragt und dem endseitigen Führungsabschnitt nachgeordnet ist. Der Führungsfinger könnte dann zum Einsatz kommen, wenn die Zielstation etwas komplizierter ist. Zum Beispiel könnte eine Crimpstation keinen Führungstrichter aufweisen, in den die Leitung selbstzentrierend eingeführt wird. Diese Führungs- und Zentrierfunktion könnte dann der Führungsfinger übernehmen, der als separates Bauteil reversibel - je nach Anwendungsfall - am Werkzeug angeordnet werden könnte. Weitere Anwendungsfälle des vorteilhaften Führungsfingers sind die Zuführung der bereits mit Kontaktelementen verbundenen elektrischen Leitung zu Montageorten, wie Steckerbuchse oder Kabelbaum. Auch der Führungsfinger könnte geteilt ausgebildet und in eine Offenstellung und in eine Betriebsstellung verbringbar sein, damit die elektrische Leitung nach der Montage in der Offenstellung freigegeben werden kann. Auch hier könnte die Öffnung des Führungsfingers bevorzugt pneumatisch oder elektrisch herbeigeführt werden.

Gemäß einer für die Ausführung der Erfindung wesentlichen Ausführungsform könnte die Zentriereinrichtung, speziell deren Führungsfinger, mittels Kamera die axiale Abweichung der Position des Führungsfingers von der Mittelachse der Öffnung der Zielstation bestimmen, um diese Abweichung beim Einführen dann automatisch zu korrigieren. Gerade im Anwendungsfall Steckerstifte, die meist nicht ganz korrekt ausgerichtet sind, ist eine hohe Genauigkeit erforderlich. Hier ist der Einsatz einer Kamera sehr vorteilhaft, um eine axiale Flucht zu realisieren.

Eine weitere vorteilhafte Weiterbildung der erfindungsgemäßen Vorrichtung sieht eine Beschriftungseinrichtung vor, die während des Transports der Leitung oder im Stillstand der Halte- und Transporteinrichtung die Leitung beschriftet. Ein geeigneter Beschriftungsort könnte bspw. im Bereich eines Führungsabschnittes sein. Bei zwei hintereinander geschalteten Transportbandpaaren bietet sich der mittlere Führungsabschnitt an, der dann mit einem entsprechenden Zugang für die Beschriftungseinrichtung, insbesondere eine laserbasierte Beschriftungseinrichtung, versehen ist.

Die beschriebene erfindungsgemäße Vorrichtung könnte Bestandteil einer gesamten Anlage sein, innerhalb der die Komponenten, wie des weiteren die mindestens eine Zielstation und ggf. die Entnahmestation aufeinander abgestimmt sind und miteinander interagieren.

Gemäß einem bevorzugten Ausführungsbeispiel, wobei die Entnahmestation eine Ablängstation ist, könnte diese auf das Werkzeug des Roboters abgestimmt sein und mit diesem interagieren. Konkret könnte das Werkzeug des Roboters eine Halte- und Transporteinrichtung umfassent, deren Vorschubgeschwindigkeit der durch die Ablängstation realisierten Vorschubgeschwindigkeit entspricht. Dieselbe Vorschubgeschwindigkeit ermöglicht einen ruhigen Transport der elektrischen Leitung ohne Schwankungen.

Ein weiteres bevorzugtes Ausführungsbeispiel der erfindungsgemäßen Anlage könnte eine Abstimmung und Interaktion zwischen dem Werkzeug des Roboters und einer Zielstation derart realisieren, dass die Zielstation Positionsmarkierungen aufweist und dass das Werkzeug des Roboters Detektoren zur Erkennung der Positionsmarkierungen aufweist. Der Roboter könnte dann das Werkzeug passend positionieren und eine Flucht vom Werkzeug zur Zielstation herstellen. Diese Positionsmarken-Ausgestaltung kann auch bei der Entnahmestation angewendet werden. Zudem könnte hier eine Steuerung bei der Datenverarbeitung und Signalgebung für die Beweungsabläufe von Vorteil sein.

Insbesondere bei der Verwendung der erfindungsgemäßen Vorrichtung als Komponente innerhalb der Anlage könnte das Werkzeug des Roboters eine Zentriereinrichtung umfassen, die mit Führungsabschnitten ausgestattet ist. Zumindest das zum Einsatz an der Zielsatation dienende Ende der elektrischen Leitung könnte in der Betriebsstellung innerhalb der Zentriereinrichtung verbleiben und nicht abragen, sondern bündig abschließen, bis sich das Werkzeug vor der Übergabe an die Zielstation befindet. Erst dann wird ein weiterer Vorschub der Leitung in Richtung Zielsattion vorgenommen und die Überführung durchgeführt. Auf diese Weise wird bis zur Übergabe in die Zielstation die Positionierung nicht behindert und eine Qualitätseinbuße am Leitungsende bleibt ausgeschlossen. Bei der Annäherung des Werkzeuges an die Zielstation sind auch hier Interaktionen von Positionsmarkierungen und Detektoren im Hinblick auf die Präzision der Leitungszuführung zur Zielstation vorteilhaft.

Gemäß einer bevorzugten Ausführungsform der erfindungsgemäßen Anlage soll flexibel auf unterschiedliche elektrische Leitungen reagiert werden. Hierzu wurde die erfindungswesentliche Lösung gefunden, bei der Verwendung einer erfindungsgemäßen Vorrichtung als Komponente in der erfindungsgemäßen Anlage einen Speicher für reversibel bzw. lösbar mit dem Werkzeug verbundene Zentriereinrichtungen vorzusehen, die auf verschiedene Querschnitte elektrischer Leitungen abgestimmt sind. Die plattenförmigen Bauteile der Zentriereinrichtungen tragen Führungsabschnitte, die auf die Art der Leitung und die Abmessung des Leitungsquerschnittes der aus der Entnahmestation kommenden Leitung abgestimmt sind. Der Wechsel der Zentriereinrichtung soll schnell vor sich gehen. Hier kommen Magnetverbindungen zum Werkzeug und zum Speicher in Betracht. Denkbar wären auch Vorsprünge am plattenförmigen Bauteil, das in Nuten oder Bajonettöffnungen am Speicher eingreift. Der Speicher mit den Zentriereinrichtungen könnte eine weitere Komponente der erfindungsgemäßen Anlage sein.

Von besonderem Vorteil ist es für den automatischen Ablauf der Vorgänge in der erfindungsgemäßen Anlage, wenn als weitere Anlagenkomponente eine Steuerung vorgesehen ist, die die Entnahmestation, die Zielstation, das Werkzeug und den Roboter und - sofern vorhanden den Speicher mit den Zentriereinrichtungen - ansteuert. Darüber hinaus soll mittels der Steuerung auch die Koordination der Arbeitsabläufe realisiert werden. Beispielsweise ist der gewünschte Leitungsquerschnitt und die zu verwendende Zentriereinrichtung mit den passenden Führungsabschnitten zu koordinieren, ebenso wie alle Bewegungsabläufe des Roboters hinsichtlich des Verfahrens und hinsichtlich der Werkzeugbewegungen und im Hinblick auf die Vorschub- und Rückschubbewegungen der Leitung im Werkzeug selbst oder betreffend das Ablängen der Leitung, das Abisolieren, das Konfektionieren mit einem Kontaktbauteil und der Montage der Leitung an Anwendungsorten wie Steckbuchse, Schaltschrank, Kabelbaum etc..

Das Ansteuern aller Zielstationen könnte dabei auch Ausnahmen beinhalten. Die Anlagenkomponente "Crimpstation" wäre bei entsprechender Ausstattung im Hinblick auf den Crimpvorgang als solchen selbstständig in der Lage ein Crimpprogramm abzuarbeiten, welches mit der Anlagenkomponente "Steuerung" nicht begleitet werden muss. Die Anlagenkomponente "Steuerung" würde dann wieder aktiv, wenn das gecrimpte Leitungsende in das Werkzeug eingefahren wird und sich Folgeschritte, wie Crimpen des zweiten Leitungsendes bei vorheriger Werkzeugrotation und / oder Stecker-Leitungs-Montage und / oder Fallenlassen der gecrimpten Leiting in einen Speicher bei vorheriger Öffnung des Werkzeuges, anschließen. In diesem Zusammenhang ist es besonderst vorteilhaft, wenn die Anlagenkomponente "Steuerung" über eine Empfängereinheit verfügen würde, die mit einer Sendereinheit der nach eigenem Programm arbeitenden Crimpstation zusammenwirkt. Hier sind solche Crimpstationen gemeint, welche die Crimpkräfte zur Qualitätssicherung messen, überwachen und aufzeichnen. Solche Daten würden dann in vorteilhafter Weise auch von der Anlagenkomponente "Steuerung" verarbeitet. Im Falle eines von der Crimpstation gesendeten Signals betreffend eine qualitativ unzureichende Crimpung im Sinne von Ausschuss würde dann die Anlagenkomponente "Steuerung" dazu aktivieren, den Roboter so anzusteuern, dass die Ausschuss-Leitung in eine Ausschuss Box ausgeworfen wird.

Die mindestens eine Zielstation der erfindungsgemäßen Anlage könnte eine Abisolierstation und / oder eine Crimpstation und/oder eine Elektrokomponente und / oder Steckerbuchse und / oder eine Steckerbatterie und / oder ein Schaltschrank und / oder ein Kabelbaum und / oder ein Lager für abgelängte und / oder abisolierte und / oder mit Kontaktbauteilen konfektionierte elektrische Leitungen sein. Die Zielstation "Elektrokomponente" soll alle möglichen Geräteanschlüsse bzw. Anschlusstechnologien umfassen, auch solche, bei denen der Anschluss über mit der elektrischen Leitung verbundene Kontaktbauteile in Form von Anschlussklemmen durchgeführt wird. Die Zielstation "Crimpstation" könnte in Form von vorhandenen oder zugekauften Crimphalbautomaten vorliegen, die das Crimpen von Aderendhülsen / Kabelschuhen / Steckerstiften realisieren. Zudem könnte auch eine Zielstation in Form einer kombinierten Abisolier- und Crimpstation vorliegen. Des weiteren könnte die Zielstation mindestens eine Steckerbatterie sein, deren Stecker mit der entsprechenden Leitung verbunden werden. Des weiteren könnte die Zielstation ein Schaltschrank sein, der mit der entsprechenden elektrischen Leitung verbunden wird. Eine weitere Möglichkeit einer Zielstation könnte mindestens ein Kabelbaum sein, zu dem die elektrischen Leiter transportiert werden und am Kabelbaum selbst dann eine Montage im Wege einer Verbindungs-Biegetechnik zum Einsatz kommt. Weiterführend könnte eine Lötstation als Zielstation vorgesehen sein, in deren Kontakte die abisolierte Leitung zentriert eingeführt wird.

Bei der Anlagenkomponente in Form eines Kabelbaumes könnten dort Halteeinrichtungen zum Halten der elektrischen Leitungen auf einer Kabelbaumplatte vorgesehen sein. Die Halteeinrichtungen könnten drehbar und in der gewünschten durch Drehen herbeigeführten Position festlegbar, auf der Kabelbaumplatte angeordnet sein.

Die Halteeinrichtungen könnten einerseits an zumindest einem Ende abisolierte Leitungen aufnehmen, die das Werkzeug liefert oder die Halteeinrichtungen könnten als Steckeraufnahmen ausgebildet sein und Leitungen aufnehmen, die mit Steckern konfektioniert sind und ebenfalls vom Werkzeug des Roboters kommen. In beiden Fällen können die Leitungen wegen der Abstimmung und Interaktion zwischen Werkzeug und Zielstation "Kabelbaum" und dank der Beweglichkeit des Roboters kabelbaumspezifisch verlegt werden.

In vorteilhafter Weise könnte die Kabelbaumplatte mit Durchtrittsöffnungen für die vorzugsweise magnetische Positionierung der Halteeinrichtungen versehen sein. Die Durchtrittsöffnungen könnten im 45°-Raster Ausnehmungen enthalten, welche den Eingriff von Nocken der Halteeinrichtung erlauben und damit die Möglichkeit bereitstellen, die Halteeinrichtung so zu drehen, dass der gewünschten Verlegerichtung der Leitung entsprochen werden kann. Hinter der Kabelbaumplatte könnte eine dünne Stahlplatte montiert werden, welche es erlaubt die Halteeinrichtungen, die im Boden einen Magneten tragen, magnetisch zu positionieren und zu fiixieren.

Die Halteeinrichtung für die elektrischen Leitungen könnte eine nach oben öffnende U-Form aufweisen, wobei die U-Form-Öffnung aber durch drehbar und federnd gelagerte, schwenkbare Rückhaltehebel blockiert ist. Der Zweck dieser Rückhaltehebel ist die Fixierung der in die Halteeinrichtung eingebrachten an zumindest einem Ende abisolierten Leitungen, damit sie während dem Verlegen weiterer Leitungen nicht aus der Halteeinrichtung fallen können. Gemäß einer bevorzugten Ausführungsform wird die Leitung mittels Führungsfinger zur Halteeinrichtung bewegt, der Führungsfinger ist stabil genug, um die Rückhaltehebel zu verschwenken und im darunter befindlichen Raum die Leitung freizugeben, die dann gesichert zwischen den U-Schenkeln der U-förmigen Halteeinrichtung verbleibt. Dieser Vorgang wird dann so oft wie für den Kabelbaum nötig wiederholt.

Die als Steckeraufnahme ausgebildete Halteeinrichtung für Leitungen, die mit Steckern konfektioniert sind, könnte ebenfalls magnetisch auf der Kabelplatte befestigt sein. In die Steckeraufnahme könnte dann das mit dem Stecker konfektionierte Ende der elektrischen Leitung mit Hilfe des Werkzeuges des Roboters eingesteckt werden. Die als Steckeraufnahme ausgebildete Halteeinrichtung könnte zur Ausbildung einer oder mehrere Steckverbindungen ausgebildet sein. Die Ausgestaltung der Halteeinrichtung mit Steckeraufnahme könnte grundsätzlich auch auf die U-Form zurückzugreifen, deren U-Schenkel kurzzeitg aufweitbar sein müssten, um die Steckeraufnahme in diese einzuclippen. Weiterführend könnten Eingriffselemente an den U-Schenkel-Enden und Vertiefungen an der Steckeraufnahme deren unverlierbare Festlegung garantieren. Über den "U-Halter" wäre die magnetische Festlegung an der Kabelbaumplatte erhalten und auch die Ausrichtung in die vorgegebene Verlegerichtung gemäß dem 45°-Ausnehmungsraster in der Durchtrittsöffnung.

Bezüglich der erfindungsgemäßen Anlage wird hervorgehoben, dass die Entnahmestation und die mindestens eine Zielstationen räumlich voneinander beabstandet sind und der positionsveränderliche Roboter alle Stationen erreicht und mit diesen zusammenwirkt. Hierdurch ist eine maximal mögliche Freiheit der Anlagenanordnung gegeben, die auf alle vorgegebenen Räumlichkeiten angepasst werden könnte. Zudem können Anlagenkomponenten leicht geändert, erneuert oder ersetzt werden.

Das erfindungsgemäße Verfahren zum Zuführen einer elektrischen Leitung von einer Entnahmestation zu mindestens einer Zielstation bedient sich der Beweglichkeit eines Roboters, der ein Werkzeug trägt, in dem die elektrische Leitung von einer Entnahmestation zu einer Zielstation verbracht wird. Dabei wir die Leitung gehalten, transportiert und zentriert, um die Präzision der Leitungsübergabe zu gewährleisten.

Im Regelfall könnte die elektrische Leitung im abgelängten Zustand von der Entnahmestation in eine Halte- und Transporteinrichtung des Werkzeuges und in eine Zentriereinrichtung des Werkzeuges gelangen. In diesem Fall könnte die erfindungsgemäße Vorrichtung in der erfindungsgemäßen Anlage zur Durchführung des erfindungsgemäßen Verfahrens zum Einsatz kommen.

Gemäß einer Möglichkeit der Verfahrensgestaltung, wobei in der Zielstation Änderungen am ersten Ende der elektrischen Leitung vorgenommen werden, die das Abisolieren oder das Konfektionieren mit einem Kontaktbauteil betreffen könnten, würden folgende Verfahrensschritte durchgeführt werden:
- Die elektrische Leitung wird mit dem Roboter zur Zielstation verfahren.
- Die elektrische Leitung wird innerhalb des Werkzeugs in eine zur Zielstation hinweisenden Richtung transportiert.
- Die elektrische Leitung wird in der Zentriereinrichtung so zentriert, dass das erste Ende passgenau zur Zielstation weist.
- Danach transportiert die Halte- und Transporteinrichtung des Werkzeuges die elektrische Leitung mit dem ersten Ende in die Zielstation in eine zur Zielstation weisenden Richtung (Vorschub).
- In der Zielstation, insbesondere eine Abisolierstation oder eine Crimpstation, findet eine Änderung am ersten Ende der Leitung statt, insbesondere das Abisolieren oder die Konfektionierung mit einem Kontakbauteil.
- Danach transportiert die Halte- und Transporteinrichtung des Werkzeuges die elektrische Leitung mit dem ersten Ende aus der Zielstation in eine von der Zielstation wegweisenden Richtung zurück (Rückschub).

Soll auch das zweite Ende der elektrischen Leitung abisoliert werden, könnte dies über das Werkzeug des Roboters erreicht werden, nämlich dadurch, dass das Werkzeug um eine Achse gedreht wird, so dass das zweite Ende der elektrischen Leitung zur Zielstation gelangt und dadurch, dass das zweite Ende der elektrischen Leitung denselben Verfahrensschritten unterworfen wird wie das erste Ende der Leitung.

Bei Zielstationen in Form eines Speichers wird die abgelängte oder die an einem oder beiden Ende abisolierte Leitung oder mit einem Kontaktbauteil konfektionierte elektrische Leitung vom Werkzeug des Roboters freigegeben und fällt in einen Speicher, der als Behältnis vorliegen könnte.

Ist die Zielstation ein Montageort, wie bspw. eine Steckerbuchse, so wird die an einem oder beiden Ende mit einem Kontaktbauteil konfektionierte elektrische Leitung mit dem Kontaktbauteil in Form eines Steckers vom Roboter in die Steckerbuchse eingeführt.

Ist die Zielstation ein Montageort, wie bspw. eine Kabelbaum, so kann dort die an einem oder beiden Ende abisolierte Leitung oder auch mit einem Kontaktbauteil an einem oder beiden Enden konfektionierte Leitung durch den Roboter montiert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von vier Ausführungsbeispielen der Erfindung anhand der Zeichnung zu verweisen. In Verbindung mit der Erläuterung der angeführten Ausführungsbeispiele der Erfindung werden auch im Allgemeinen bevorzugte Ausgestaltungen und Weiterbildungen der Lehre erläutert. In der Zeichnung zeigen
- Fig. 1: in schematischer Perspektivdarstellung, die erfindungsgemäße Vorrichtung am Roboter in Betriebsstellung als erstes Ausführungsbeispiel,
- Fig. 2: in schematischer Perspektivdarstellung, den Gegenstand aus Fig. 1 in Offenstellung,
- Fig. 3: in geschnittener, schematischer Perspektivdarstellung aus einem Blickwinkel von unten, die hintere Hälfte des Gegenstandes aus Fig. 1 am Roboter in Offenstellung,
- Fig. 4A: eine Zentriereinrichtung der erfindungsgemäßen Vorrichtung gemäß einem zweiten Ausführungsbeispiel betreffend die im gedachten montierten Zustand vom Werkzeug wegweisende Außenseite,
- Fig. 4B: die Zentriereinrichtung aus Fig. 4A, betreffend die im gedachten montierten Zustand zum Werkzeug hinweisende Innenseite,
- Fig. 5: eine Unteransicht des Gegenstandes aus den Fig. 4A und 4B, montiert und in Betriebsstellung,
- Fig. 6: eine schematische Perspektivdarstellung des Gegenstandes aus Fig. 1 während der Entnahme der Leitung aus der Entnahmestation,
- Fig. 7: eine schematische Skizze der erfindungsgemäßen Anlage gemäß einem dritten Ausführungsbeispiel,
- Fig. 8: in schemtaischer Perspektivdarstellung eine Zielstation der erfindungsgemäßen Anlage gemäß einem vierten Ausführungsbeispiel betreffend eine Kabelbaumplatte und
- Fig. 9: in schemtaischer Perspektivdarstellung eine Halteeinrichtung für elektrische Leitungen zur Verlegung auf der Kabelbaumplatte gemäß Fig. 8.

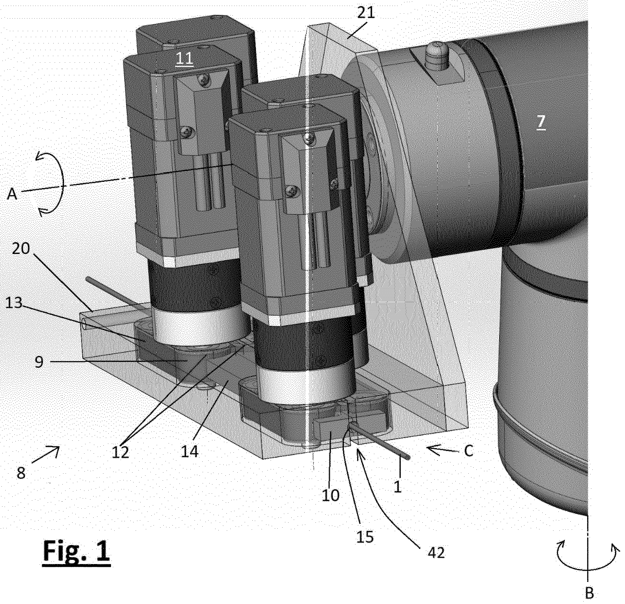

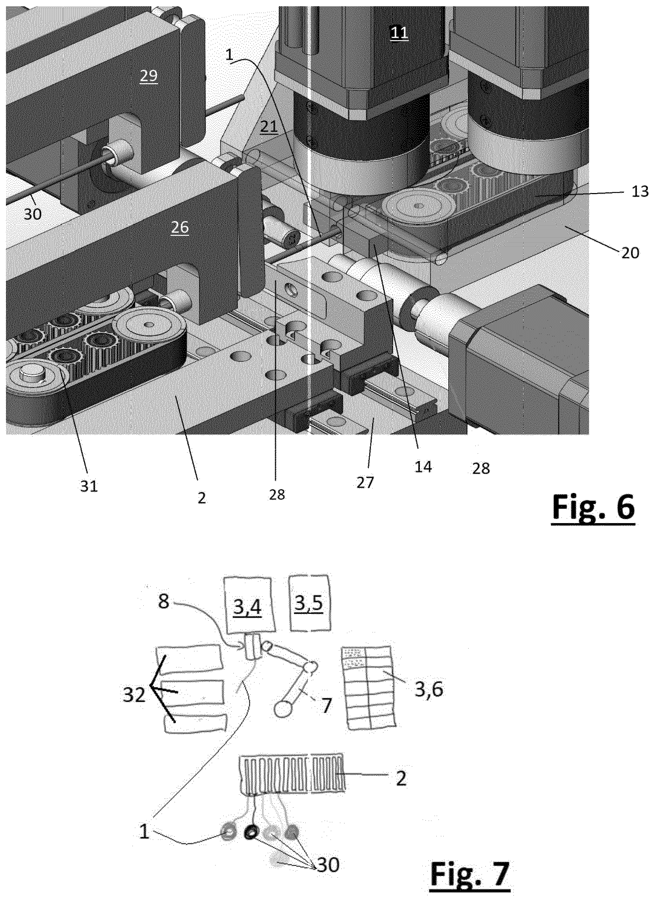

Die Fig. 1 und 7 zeigen eine Vorrichtung zum Zuführen einer elektrischen Leitung 1 von einer Entnahmestation 2 zu mindestens einer Zielstation 3 - 6, 33. Eine konkrete Entnahmestation 2 in Form einer Ablängeinrichtung ist der Fig. 6 zu entnehmen. Zur Aufnahme der elektrischen Leitung 1, 30 und zur Beförderung dieser zu einer Zielstation 3 - 6, 33 ist ein positionsveränderlicher Roboter 7 mit einem Werkzeug 8 vorgesehen.

Erfindungsgemäß weist das Werkzeug 8 eine Halte- und Transporteinrichtung 9 und eine Zentriereinrichtung 10 für die elektrische Leitung 1, 30 auf.

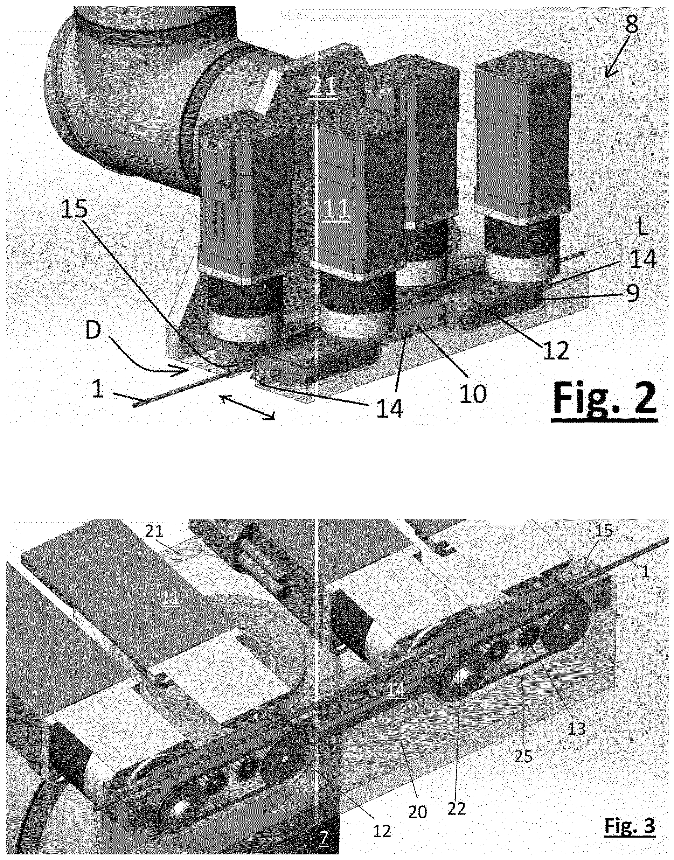

Die Halte- und Transporteinrichtung 9 ist zur Realisierung des Vorschubs und des Rückschubs der elektrischen Leitung 1, 30 mit vier Antrieben 11 ausgestattet, was in Fig. 2 dargestellt ist. Die Halte- und Transporteinrichtung 9 der in den Figuren 1 bis 6 gezeigten ersten beiden Auführungsbeispielen umfasst zwei auf einer Längsachse L angeordnete Transportbandpaare 12, wobei die Transportbänder 13 des jeweiligen Transportbandpaares 12 gegenüberliegend angeordnet sind. Zwischen den Transportbändern 13 wird die elektrische Leitung 1 transportiert und gehalten.

Die Fig. 1 zeigt, dass das Werkzeug 8 um mindestens eine der beiden zum Roboter 7 gehörenden Achsen A, B gemäß den nicht näher bezeichnet Pfeilen drehbar ist, um sowohl das erste Ende der bereits abgelängten elektrischen Leitung 1 als auch deren zweites Ende in Position zur Zielstation 3 - 6, 33 zu bringen. Während in Fig. 1 die Betriebsstellung C des Werkzeuges 8 gezeigt ist, ergibt sich aus Fig. 2 die Offenstellung D der geteilt ausgeführten Halte- und Transporteinrichtung 9 und der geteilt ausgeführten Zentriereinrichtung 10. Mit den nicht näher bezeichnete Pfeilen wird die parallele Verschiebbarkeit der Teile des Werkezuges 8 relativ voneinander weg zur Erreichung der Offenstellung D und relativ aufeinader zu zum Erreichen der Betriebsstellung C gezeigt. Die Verschiebung erfolgt beim ersten und zweiten Ausführungsbeispiel senkrecht zur Längsachse L. Im ersten Ausführungsbeispiel ist der zum Roboter 7 benachbarte Teil des Werkzeuges 8 mit einer Halteplatte 21 des Roboters 7 fest verbunden, so dass die Verschiebung über den vorderen, von der Halteplatte 21 wegweisenden Teil des Werkzeuges 8 ausgeführt wird. Die Zentriereinrichtung 10 ist im ersten Ausführungsbeispiel über das geteilte plattenförmige Bauteil 20 im Werkzeug 8 fixiert.

Bezüglich der Zentriereinrichtung 10 ist dem ersten und zweiten Ausführungsbesipiel gemeinsam, dass drei geteilte Führungsabschnitte 14 mit Nuten 15 vorgesehen sind, die in der Betriebsstellung C auf den Querschnitt der elektrischen Leitung 1 abgestimmt sind. Die Führungsabschnitte 14 sind zwischen und nach den beiden Transportbandpaaren 12 angeordnet. Die endseitigen Führungsabschnitte 14 weisen in Richtung der Längsachse L geringere Abmessungen auf als der mittlere Führungsabschnitt 14, der sich über den gesamten Abstand zwischen den beiden Transportbandpaaren 12 erstreckt. Bei allen Führungsabschnitten 14 sind Eingangs- und Ausgangsbereiche mit einer Trichterform 22 vorgesehen, die die Zentrierung der Leitung 1 unterstützen. Die Trichterform 22 erweitert sich zum jeweilgen freien Ende des jeweiligen Führungsabschnittes 14. Außerdem weisen beide plattenförmigen Bauteile 17 und 20 pro Teil zwei Ausnehmungen 25 auf, die auf die beiden Transportbandpaare 12 abgestimmt sind.

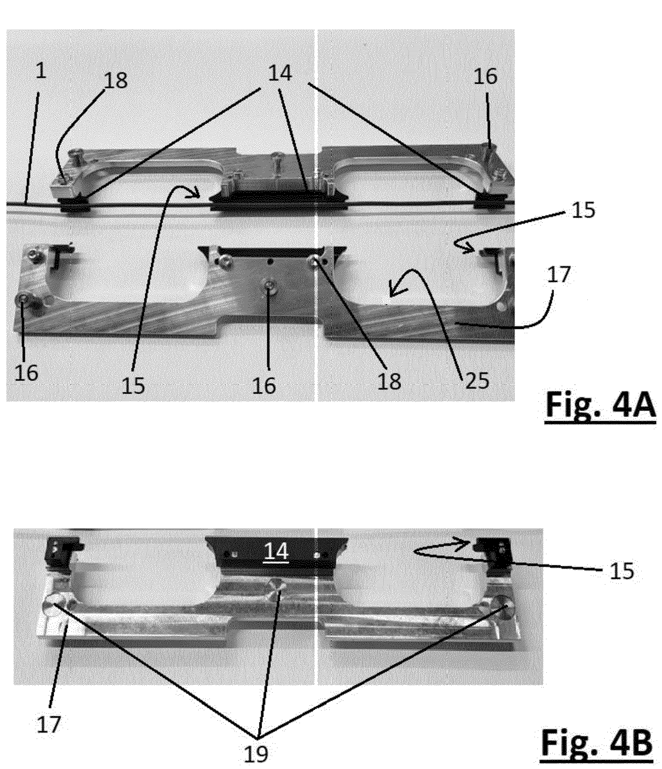

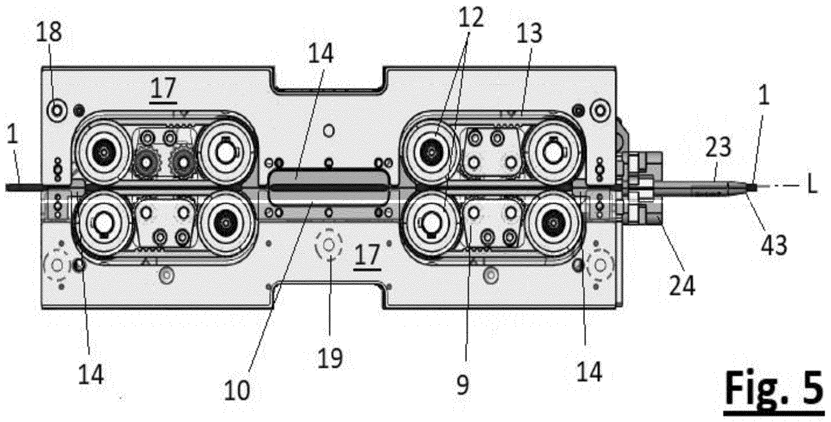

Das zweite Ausführungsbeispiel ist in den Fig. 4A, 4B und 5 gezeigt. Dort ist die Zentriereinrichtung 10 über Magnete 19 lösbar mit dem Werkzeug 8 verbindbar. Die Fig. 4B zeigt die im gedachten montierten Zustand zum Werkzeug 8 weisende Seite des plattenförmigen Bauteil 17 mit den Magneten 19, die in Fig. 5 nur gestrichelt dargestellt sind, da sie verdeckt sind. Die Fig 4A zeigt die im gedachten montierten Zustand vom Werkzeug 8 wegweisende Seite des plattenförmigen Bauteils 17 mit Eingriffsmitteln 16 zur Befestigung an einem hier nicht dargestellten Speicher mit Vertiefungen / Ausnehmungen zur Aufnahme der Eingriffsmittel 16. Des weiteren sind Verbindungsmittel 18 zur Befestigung der Führungsabschnitte 14 am plattenförmigen Bauteil 17 gezeigt.

Aus Fig. 5 ergibt sich, dass die Zentriervorrichtung 10 gemäß dem zweiten Ausführungsbeispiel zusätzlich einen Führungsfinger 23 umfasst, der vom Werkzeug 8 abragt und zur Längsachse L fluchtet. Die Längsachse L stimmt mit der Mittelachse der elektrischen Leitung 1 überein. Der Führungsfinger 23 ist hier als separates Bauteil ausgebildet und ist dem von der Entnahmestation 2 weg weisenden Führungsabschnitt 14 nachgeordnet. Auch der Führungsfinger 23 ist geteilt ausgebildet und zum Erreichen einer Offenstellung D analog zu Fig. 2 auseinanderschiebbar, damit die elektrische Leitung 1 nach der Montage freigegeben werden kann. Die Verschiebung wird über einen hier pneumatisch arbeitenden Mechanismus 24 realisiert, der den Führungsfinger 23 auseinander- und zusammenfährt. Die Halte- und Transporteinrichtung 9 und die Zentriereinrichtung 10, soweit sie die plattenförmigen Bauteile 17, 20 und die Führungsabschnitte 14 betrifft, werden im zweiten Ausführungsbeispiel von einem anderen, hier nicht dargestellten pneumatischen Antrieb auseinander- und zusammengefahren.

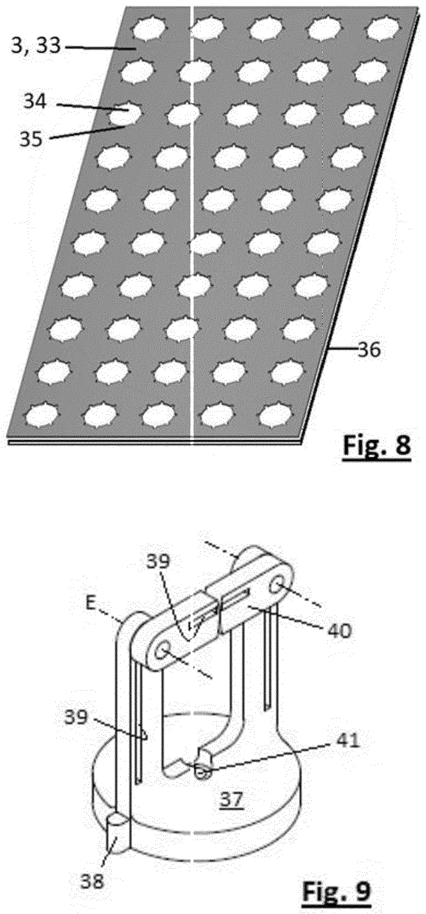

Das dritte Ausführungsbeispiel betrifft eine Anlage, die im Überblick in Fig. 7 gezeigt ist und zum Zuführen der elektrischen Leitung 1, 30 von der Entnahmestation 2 zu mindestens einer Zielstation 3 - 6, 33 dient. Die Zielstationen 3 - 6, 33 betreffen eine Abisolierstation 4, eine Crimpstation 5 und eine Steckerbatterie 6. Gemäß einem in den Figuren 8 und 9 gezeigten vierten Ausführungsbeispiel ist eine Zielstation 3 in Form einer Kabelbaumplatte 33 vorgesehen. Zur Zuführung wird ein positionsveränderlicher Roboter 7 mit einem Werkzeug 8 eingesetzt. Das Werkzeug 8 dient zur Aufnahme der elektrischen Leitung 1, 30, welche mittels des Roboters 7 zur jeweiligen Zielstation 3 verbracht wird. Zusätzlich sind in Fig. 7 drei Sortierbehälter 32 gezeigt, in denen die konfektionierten Leitungen 1, 30 nach verschiedenen Kriterien, wie Steckerart, Länge, Zwei-Enden-Konfektionierung, gesammelt werden.

Erfindungsgemäß ist zumindest die Zielstation 3 - 6, 33 auf das Werkzeug 8 des Roboters 7 abgestimmt und interagiert mit diesem. Auch die Entnahmestation 2, die hier gemäß Fig. 6 als Ablängstation vorliegt, ist auf das Werkzeug 8 des Roboters 7 abgestimmt und interagiert mit diesem. Konkret weisen die Halte- und Transporteinrichtung 31 der Entnahmestation 2 und die Halte- und Transporteinrichtung 9 des Roboters 7 bezüglich des Transports der elektrischen Leitung 1 dieselbe Vorschubgeschwindigkeit auf. Die Entnahmestation 2 umfasst des weiteren ein Gestell 27, ein Führungsbauteil 26 für die Leitung 1, ein Führungsbauteil 29 für die Leitung 30 und eine Schneideinrichtung 28, die das Ablängen übernimmt.

Die in Fig. 1 gezeigte Vorrichtung zeigt eine von den Nuten 15 des Führungsabschnittes 14 der Zentriereinrichtung 10 in der Betriebsstellung C gebildete Öffnung 42. Dort ragt die Leitung 1 über die Öffnung hinaus. In der Anwendung in Bezug auf die Zielstation 3 - 6, 33 befindet sich die Leitung 1 bündig zur Öffnung 42 aus Fig. 1, die durch die Nuten 15 gebildet ist, und bündig zur Öffnung 43 des Führungsfingers 23 aus Fig. 5.

Das in den Fig. 8 und 9 gezeigte vierte Ausführungsbeispiel zeigt eine Zielstation 3 in Form einer Kabelbaumplatte 33. Die Interaktion zwischen dem Werkzeug 8 des Roboters 7 und der Kabelbaumplatte 33 besteht darin, dass an der Kabelbaumplatte 33 U-förmige Halteeinrichtungen 37 mit Rückhaltehebeln 40 zum Halten der elektrischen Leitungen 1, 30 auf der Kabelbaumplatte 33 angeordnet sind. Die Kabelbaumplatte 33 weist Durchtrittsöffnungen 34 auf, an deren Rand jeweils 45°-Raster-Ausnehmungen 35 angeordnet sind. Unterhalb der Kabelbaumplatte 33 befindet sich eine magnetische Unterplatte 36.

Damit die Halteeinrichtung 37 in eine gewünschte Position gedreht und festgelegt werden kann, weist die Halteeinrichtung 37 einen Nocken 38 zum Eingriff in die gewünschte 45°-Raster-Ausnehmung 35 auf und einen Magneten, der mit der magnetischen Unterplatte 36 zusammenwirkt. Mit 41 ist in Fig. 9 ein Schraubloch bezeichnet, dass den Magneten aufnimmt. Die Aufnahme der Leitung 1, 30 erfolgt dadurch, dass der Führungsfinger 23 aus Fig. 5 die beweglich gelagerten Rückhaltehebel 40 verdrängt und in den darunter befindlichen, seitlich von den U-Schenkeln der Halteeinrichtung 37 abgegerenzten Raum die Leitung 1, 30 ablegt. Der entleerte Führungsfinger 23 wird dann samt Werkzeug 8 von der Kabelbaumplatte 33 entfernt. Mit 39 sind Federschlitze in den U-Schenkeln der Halteeinrichtung 7 und in den Rückhaltehebeln 40 bezeichnet, die Federn zur Erzeugung der Rückstellkraft aufnehmen.

Das erfindungsgemäße Verfahren zum Zuführen der elektrischen Leitung 1, 30 von einer Entnahmestation 2 zu einer Zielstation 3 - 6, 33 setzt einen Roboter 7 mit einem Werkzeug 8 ein. Erfindungswesentlich sind die Schritte des Transportes in Kombination mit der Zentrierung der Leitung, die zur Präzision der positionsgenauen Einführung in die Zielstation 3 - 6, 33 trifft und in diese zum Teil eingeführt wird.

Anhand der Figuren 6, 1, 5 und 8, 9 werden nachfolgend Verfahrensschritte erläutert, die mittels der Vorrichtung mit Führungsfinger 23 ausgeführt werden und bei einer Steckerbatterie 6 als letzte Zielstation 3 enden.
- Die elektrische Leitung 1 wird über die Entnahmestation 2, hier Ablängstation, in das Werkzeug 8 soweit eingeführt wie gewünscht, wobei dieselbe Transportgeschwindigkein der Halte- und Transporteinrichtungen 31, 9 herrschen.
- Die elektrische Leitung 1 wird mittels Schneideinrichtung 28 abgelängt.
- Die elektrische Leitung 1 ragt aus der Öffnung 41 und wird innerhalb der Halte- und Transporteinrichtung 9 des Werkzeuges 8 so zurücktransportiert, dass der Anfang der Leitung mit der Öffnung 41 bündig ist.
- Die elektrische Leitung 1 wird mit dem Roboter 7 zur Abisolierstation 4 als Zielstation 3 verfahren, es erfolgen Ausrichtung, passgenaue Zentrierung, Einführen (Vorschub), Abisolieren, Heraustransportieren (Rückschub) aus der Abisolierstation 4, das abisolierte Ende wird dabei nicht in das Werzeug 8 zurückverfahren.
- Die elektrischen Leitung 1 wird in eine Crimpstation 5 verbracht, es erfolgen Ausrichtung, passgenaue Zentrierung, Einführen (Vorschub), Konfektionierung mit dem Stecker, Heraustransportieren (Rückschub) aus der Crimpstation 5, das konfektionierte Ende der Leitung 1 bleibt vor dem Führungsfinger 23.
- Der Roboter verbringt die Leitung 1 mit dem Steckerende zur Steckerbatterie 6 als Zielstation 3, es erfolgen Ausrichtung, passgenaue Zentrierung, Einführen (Vorschub), in die Buchse der Steckerbatterie 6 und Freigabe der Leitung 1.

Für den Fall, dass zwei Enden der elektrischen Leitung 1 mit Steckern bestückt werden sollen, erfolgt nach der Abisolierung des ersten Leitungs-Endes eine Drehung des Werkzeuges 8 um 180 ° um Achse B, so dass das Abisolieren des zweiten Leitungs-Endes erfolgen kann. Nun kann das zweite Leitungs-Ende zuerst gecrimpt werden, dann wird wieder um 180° gedreht und das erste Leitungs-Ende gecrimpt. Schließlich werden in diesem Fall zwei Buchsen der Steckerbatterie 6 bestückt und die Freigabe der konfektioniertemn elektrischen Leitung 1, 30 erfolgt erst nach der zweiten Bestückung.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf die voranstehend erörterten Ausführungsbeispiele eingeschränkt ist. Vielmehr sind verschiedene Verfahrensabläufe denkbar, die Zweiteilung der Halte- und Transporteinrichtung und der Zentriereinrichtung könnte bspw. über Kipp-Techhniken statt über Verschiebetechnik realisiert werden. Bezüglich der Anlage könnten weitere Zielstationen, wie bspw. eine Lötstation, hinzutreten.

**Bezugszeichenliste**

| | | | |
|---|---|---|---|
| 1 | Elektrische Leitung | 23 | Führungsfinger |
| 2 | Entnahmestation | 24 | Mechanismus (Offen/Betrieb) |
| 3 | Zielstation | 25 | Ausnehmung |
| 4 | Abisolierstation | 26 | Führungsbauteil |
| 5 | Crimpstation | 27 | Gestell |
| 6 | Steckerbatterie | 28 | Schneideinrichtung |
| 7 | Roboter | 29 | Alternatives Führungsbauteil |
| 8 | Werkzeug | 30 | Alternative Leitung |
| 9 | Halte- und Transporteinrichtung | 31 | Halte- und Transporteinrichtung |
| 10 | Zentriereinrichtung | 32 | Sortierbehälter |
| 11 | Antrieb | 33 | Kabelbaumplatte |
| 12 | Transportbandpaar | 34 | Durchtrittsöffnung |
| 13 | Transportband | 35 | 45°-Raster-Ausnehmung |
| 14 | Führungsabschnitt | 36 | Magnetische Unterplatte |
| 15 | Nut | 37 | Halteeinrichtung |
| 16 | Eingriffsmittel | 38 | Nocken |
| 17 | Plattenförmiges Bauteil | 39 | Feder-Schlitze |
| 18 | Verbindungsmittel | 40 | Schwenkhebel |
| 19 | Magnet | 41 | Schraubloch für Magnet |
| 20 | Plattenförmiges Bauteil | 42 | Öffnung |
| 21 | Halteplatte | 43 | Öffnung |
| 22 | Trichterform | | |

| | |
|---|---|
| A | Drehachse |
| B | Drehachse |
| C | Betriebsstellung |
| D | Offenstellung |
| E | Drehachse |

## Patentansprüche

1. Vorrichtung zum Zuführen einer elektrischen Leitung (1, 30) von einer Entnahmestation (2) zu mindestens einer Zielstation (3 - 6, 33), wobei ein positionsveränderlicher Roboter (7) mit einem Werkzeug (8) zur Aufnahme der elektrischen Leitung (1, 30) vorgesehen ist und wobei die elektrische Leitung (1, 30) mittels des Roboters (7) zur Zielstation (3 - 6, 33) verbringbar ist,
**dadurch gekennzeichnet,**
**dass** das Werkzeug (8) eine Halte- und Transporteinrichtung (9) und eine Zentriereinrichtung (10) für die elektrische Leitung (1, 30) umfasst.

2. Vorrichtung nach Anspruch 1, **dadurch gekennzeichnet, dass** die Halte- und Transporteinrichtung (9) zum Vorschub und zum Rückschub der elektrischen Leitung (1, 30) mit mindestens einem Antrieb (11) ausgestattet ist,

3. Vorrichtung nach Ansprüche 1 oder 2, **dadurch gekennzeichnet, dass** die Halte- und Transporteinrichtung (9) zumindest ein Transportbandpaar (12) umfasst, wobei die Transportbänder (13) des Transportbandpaares (12) gegenüberliegend angeordnet sind und wobei zwischen den Transportbändern (13) die elektrische Leitung (1, 30) transportierbar ist.

4. Vorrichtung nach einem der Ansprüche 1 bis 3, **dadurch gekennzeichnet, dass** das Werkzeug (8) mit der Halte- und Transporteinrichtung (9) und der Zentriereinrichtung (10) um mindestens eine Achse (A, B) drehbar ist, um sowohl das erste Ende einer bereits abgelängten elektrischen Leitung (1, 30) als auch deren zweites Ende in Position zur Zielstation (3 - 6, 33) zu bringen.

5. Vorrichtung nach einem der Ansprüche 1 bis 4, **dadurch gekennzeichnet, dass** die Halte- und Transporteinrichtung (9) und die Zentriereinrichtung (10) in eine Offenstellung (D) und in eine Betriebsstellung (C) verbringbar sind.

6. Vorrichtung nach einem der Ansprüche 1 bis 5, **dadurch gekennzeichnet, dass** die Zentriereinrichtung (10) dem Werkzeug (8) reversibel zugeordnet ist und mit dem Werkzeug (8) lösbar verbindbar ist.

7. Vorrichtung nach einem der Ansprüche 1 bis 6, dass die Zentriereinrichtung (10) mindestens einen Führungsabschnitt (14) aufweist, der auf den Querschnitt der elektrischen Leitung (1, 30) abgestimmt ist.

8. Vorrichtung nach Anspruch 7 in Verbindung mit Anspruch 3, **dadurch gekennzeichnet, dass** der Führungsabschnitt (14) vor und / oder nach dem Transportbandpaar (12) angeordnet ist.

9. Vorrichtung nach einem der Ansprüche 1 bis 7, **dadurch gekennzeichnet, dass** die Zentriereinrichtung (10) mindestens einen Führungsfinger (23) umfasst, der vorzugsweise vom Werkzeug (8) abragt.

10. Anlage mit einer Vorrichtung nach Anspruch 1,
**dadurch gekennzeichnet,**
**dass** zumindest die Zielstation (3 - 6, 33) auf das Werkzeug (8) des Roboters (7) abgestimmt ist und mit diesem interagiert.

11. Anlage nach Anspruch 10, **dadurch gekennzeichnet, dass** die Entnahmestation (2) eine Ablängstation ist, die auf das Werkzeug (8) des Roboters (7) abgestimmt ist und mit diesem interagiert, wobei das Werkzeug (8) des Roboters (7) und die Entnahmestation (2) jeweils eine Halte- und Transporteinrichtung (9, 31) umfassen, welche zum Transport der elektrischen Leitung (1, 30) dieselbe Vorschubgeschwindigkeit aufweisen.

12. Anlage nach Anspruch 10 oder 11, **dadurch gekennzeichnet, dass** das der Zielstation (3 - 6, 33) zugewandte Ende der Zentriereinrichtung (10) die elektrische Leitung (1, 30) zumindest vor der Übergabe an die Zielstation (3 - 6, 33), bündig enthält.

13. Anlage nach einem der Ansprüche 10 bis 12, **dadurch gekennzeichnet, dass** eine Steuerung vorgesehen ist, die die Entnahmestation und die Zielstation, das Werkzeug und den Roboter ansteuert und ggf. koordiniert.

14. Anlage nach einem der Ansprüche 10 bis 13, **dadurch gekennzeichnet, dass** die mindestens eine Zielstation (3 - 6, 33) eine Abisolierstation (4) und / oder eine Crimpstation (5) und/oder eine Elektrokomponente und / oder Steckerbuchse und / oder eine Steckerbatterie (6) und / oder ein Schaltschrank und / oder eine Kabelbaumplatte (33) und / oder ein Lager für abgelängte und / oder abisolierte oder mit Kontaktbauteilen konfektionierte elektrische Leitungen (1, 30) ist.

15. Anlage nach Anspruch 14, wobei eine Zielstation (3) in Form einer Kabelbaumplatte (33) vorliegt, **dadurch gekennzeichnet, dass** Halteeinrichtungen (37) mit Rückhaltehebeln (40) zum Halten der elektrischen Leitungen (1, 30) auf der Kabelbaumplatte (33), vorzugsweise drehbar und in der gewünschten durch Drehen herbeigeführten Position festlegbar, angeordnet sind.

16. Verfahren zum Zuführen einer elektrischen Leitung von einer Entnahmestation zu mindestens einer Zielstation, wobei ein positionsveränderlicher Roboter mit einem Werkzeug zur Aufnahme der elektrischen Leitung vorgesehen ist und wobei die elektrische Leitung mittels des Roboters zur Zielstation verbracht wird,
**dadurch gekennzeichnet,**
**dass** die elektrische Leitung im Werkzeug derart gehalten, transportiert und zentriert wird, dass die elektrische Leitung positionsgenau auf die Zielstation trifft und in diese zum Teil eingeführt wird.

17. Verfahren nach Anspruch 16, **dadurch gekennzeichnet, dass** die elektrische Leitung im abgelängten Zustand von der Entnahmestation in eine Halte- und Transporteinrichtung des Werkzeuges und in eine Zentriereinrichtung des Werkzeuges gelangt.

18. Verfahren nach Anspruch 17, **dadurch gekennzeichnet,**
• **dass** die elektrische Leitung mit dem Roboter zur Zielstation verfahren wird,
• **dass** die elektrische Leitung innerhalb des Werkzeugs in eine zur Zielstation hinweisenden Richtung transportiert wird,
• **dass** die elektrische Leitung in der Zentriereinrichtung so zentriert wird, dass das erste Ende der elektrischen Leitung passgenau zur Zielstation weist,
• **dass** danach die Halte- und Transporteinrichtung des Werkzeuges die elektrische Leitung mit dem ersten Ende in die Zielstation in eine zur Zielstation weisenden Richtung transportiert (Vorschub),
• **dass** in der Zielstation, insbesondere eine Abisolierstation oder eine Crimpstation, eine Änderung am ersten Ende der Leitung stattfindet, insbesondere das Abislolieren oder die Konfektionierung mit einem Kontaktbauteil und
• **dass** danach die Halte- und Transporteinrichtung des Werkzeuges die elektrische Leitung mit dem ersten Ende aus der Zielstation in eine von der Zielstation wegweisenden Richtung zurücktransportiert (Rückschub).

19. Verfahren nach Anspruch 18, **dadurch gekennzeichnet, dass** zur Vornahme einer Änderung am zweiten Ende der elektrischen Leitung das Werkzeug um eine Achse gedreht wird, so dass das zweite Ende der elektrischen Leitung zur Zielstation gelangt und denselben Verfahrensschritten unterworfen wird wie das erste Ende der Leitung.

## Claims

1. Device for feeding an electric line (1, 30) from a removal station (2) to at least one target station (3 - 6, 33), wherein a position-adjustable robot (7) with a tool (8) for picking up the electric line (1, 30) is provided and wherein the electric line (1, 30) can be transported to the target station (3 - 6, 33) by means of the robot (7),
**characterized In that**
the tool (8) comprises a holding and transport device (9) and a centering device (10) for the electric line (1, 30).

2. Device according to claim 1, **characterized in that** the holding and transport device (9) for feeding and retracting the electric line (1, 30) is equipped with at least one drive (11).

3. Device according to claims 1 or 2, **characterized in that** the holding and transport device (9) comprises at least one pair of conveyor belts (12), wherein the conveyor belts (13) of the pair of conveyor belts (12) are arranged opposite each other and wherein the electric line (1, 30) can be transported between the conveyor belts (13).

4. Device according to one of claims 1 to 3, **characterized in that** the tool (8) with the holding and transport device (9) and the centering device (10) can be rotated about at least one axis (A, B) in order to bring both the first end of an electric line (1, 30) that has already been cut to length and its second end into position relative to the target station (3 - 6, 33).

5. Device according to one of claims 1 to 4, **characterized in that** the holding and transport device (9) and the centering device (10) can be moved into an open position (D) and into an operating position (C).

6. Device according to one of claims 1 to 5, **characterized in that** the centering device (10) is reversibly assigned to the tool (8) and can be detachably connected to the tool (8).

7. Device according to one of claims 1 to 6, wherein the centering device (10) has at least one guide section (14) that is matched to the cross-section of the electric line (1, 30).

8. Device according to claim 7 in conjunction with claim 3, **characterized in that** the guide section (14) is arranged before and/or after the pair of conveyor belts (12).

9. Device according to one of claims 1 to 7, **characterized in that** the centering device (10) comprises at least one guide finger (23) which preferably protrudes from the tool (8).

10. System with a device according to claim 1,
**characterized In that**
at least the target station (3-6, 33) is coordinated with the tool (8) of the robot (7) and interacts with it.

11. System according to claim 10, **characterized in that** the removal station (2) is a cutting-to-length station that is coordinated with the tool (8) of the robot (7) and interacts with it, wherein the tool (8) of the robot (7) and the removal station (2) each comprise a holding and transport device (9, 31) which have the same feed speed for transporting the electric line (1, 30).

12. System according to claim 10 or 11, **characterized in that** the end of the centering device (10) facing the target station (3-6, 33) contains the electric line (1, 30) flush at least before it is transferred to the target station (3-6, 33).

13. System according to one of claims 10 to 12, **characterized in that** a control system is provided which controls and, if necessary, coordinates the removal station and the target station, the tool, and the robot.

14. System according to one of claims 10 to 13, **characterized in that** the at least one target station (3-6, 33) comprises a stripping station (4) and / or a crimping station (5) and / or an electrical component and / or a plug socket and /or a plug battery (6) and / or a switch cabinet and / or a cable harness plate (33) and / or a storage facility for electric lines (1, 30) that have been cut to length and / or stripped or fitted with contact components.

15. System according to claim 14, wherein a target station (3) is provided in the form of a cable harness plate (33), **characterized in that** retaining devices (37) with retaining levers (40) for retaining the electric lines (1, 30) on the cable harness plate (33) are arranged, preferably rotatably and fixable in the desired position brought about by rotation.

16. Method for feeding an electric line from a removal station to at least one target station, wherein a position-adjustable robot with a tool for picking up the electric line is provided and wherein the electric line is transported to the target station by means of the robot, **characterized In that**
the electric line is held, transported, and centered in the tool in such a way that the electric line arrives at the target station in a precisely positioned manner and is partially inserted into it.

17. Method according to claim 16, **characterized in that** the electric line, when cut to length, is transferred from the removal station to a holding and transport device of the tool and to a centering device of the tool.

18. Method according to claim 17, **characterized in that**
• the electric line is moved with the robot to the target station,
• the electric line is transported within the tool in a direction pointing toward the target station,
• the electric line is centered in the centering device so that the first end of the electric line points precisely toward the target station,
• the holding and transport device of the tool then transports the electric line with the first end into the target station in a direction pointing towards the target station (feed),
• a change is made to the first end of the line in the target station, in particular a stripping station or a crimping station, in particular stripping or assembly with a contact component, and
• that the holding and transport device of the tool then transports the electric line with the first end back from the target station in a direction away from the target station (return transport).

19. Method according to claim 18, **characterized in that**, in order to make a change at the second end of the electric line, the tool is rotated about an axis so that the second end of the electric line reaches the target station and is subjected to the same process steps as the first end of the line.

## Revendications

1. Dispositif pour acheminer une ligne électrique (1, 30) depuis une station de prélèvement (2) vers au moins une station cible (3 - 6, 33), un robot (7) à position variable étant prévu avec un outil (8) pour saisir la ligne électrique (1, 30) et la ligne électrique (1, 30) pouvant être amené à la station cible (3 - 6, 33) au moyen du robot (7), **caraetérlsé en ce que** l'outil (8) comprend un dispositif de maintien et de transport (9) et un dispositif de centrage (10) pour la ligne électrique (1, 30).

2. Dispositif selon la revendication 1, **caractérisé en ce que** le dispositif de maintien et de transport (9) destiné à faire avancer et reculer la ligne électrique (1, 30) est équipé d'au moins un actionneur (11).

3. Dispositif selon les revendications 1 ou 2, **caractérisé en ce que** le dispositif de maintien et de transport (9) comprend au moins une paire de bandes transporteuses (12), les bandes transporteuses (13) de la paire de bandes transporteuses (12) étant disposées en vis-à-vis et la ligne électrique (1, 30) pouvant être transporté entre les bandes transporteuses (13).

4. Dispositif selon l'une des revendications 1 à 3, **caractérisé en ce que** l'outil (8) avec le dispositif de maintien et de transport (9) et le dispositif de centrage (10) peut tourner autour d'au moins un axe (A, B) afin d'amener à la fois la première extrémité d'une ligne électrique déjà coupé à longueur (1, 30) et sa deuxième extrémité en position par rapport à la station cible (3 - 6, 33).

5. Dispositif selon l'une des revendications 1 à 4, **caractérisé en ce que** le dispositif de maintien et de transport (9) et le dispositif de centrage (10) peuvent être amenés dans une position ouverte (D) et dans une position de fonctionnement (C).

6. Dispositif selon l'une des revendications 1 à 5, **caractérisé en ce que** le dispositif de centrage (10) est associé de manière réversible à l'outil (8) et peut être relié de manière amovible à l'outil (8).

7. Dispositif selon l'une des revendications 1 à 6, dans lequel le dispositif de centrage (10) comporte au moins une section de guidage (14) qui est adaptée à la coupe transversale de la ligne électrique (1, 30).

8. Dispositif selon la revendication 7 en liaison avec la revendication 3, **caractérisé en ce que** la section de guidage (14) est disposée avant et / ou après la paire de bandes transporteuses (12).

9. Dispositif selon l'une des revendications 1 à 7, **caractérisé en ce que** le dispositif de centrage (10) comprend au moins un doigt de guidage (23) qui dépasse de préférence de l'outil (8).

10. Système comprenant un dispositif selon la revendication 1,
**caractérisée en ceque** au moins la station cible (3 - 6, 33) est adaptée à l'outil (8) du robot (7) et interagit avec celui-ci.

11. Système selon la revendication 10, **caractérisée en ce que** la station de prélèvement (2) est une station de coupe à longueur qui est adaptée à l'outil (8) du robot (7) et interagit avec celui-ci, l'outil (8) du robot (7) et la station de prélèvement (2) comprenant chacun un dispositif de maintien et de transport (9, 31) qui présente la même vitesse d'avance pour le transport de la ligne électrique (1, 30).

12. Système selon la revendication 10 ou 11, **caractérisée en ce que** l'extrémité du dispositif de centrage (10) tournée vers la station cible (3 - 6, 33) contient la ligne électrique (1, 30) de manière affleurante, au moins avant le transfert vers la station cible (3 - 6, 33).

13. Système selon l'une des revendications 10 à 12, **caractérisée en ce qu'**il est prévu une commande qui commande et, le cas échéant, coordonne la station de prélèvement et la station cible, l'outil et le robot.

14. Système selon l'une des revendications 10 à 13, **caractérisée en ce que** la au moins une station cible (3 - 6, 33) comprend une station de dénudage (4) et / ou une station de sertissage (5) et / ou un composant électrique et / ou une prise femelle et / ou une batterie de connecteurs (6) et / ou une armoire de commande et / ou une plaque de faisceau de câbles (33) et / ou un réservoir pour des lignes électriques (1, 30) coupés à longueur et/ou dénudés ou équipés de composants de contact.

15. Système selon la revendication 14, dans laquelle une station cible (3) se présente sous la forme d'une plaque de faisceau de câbles (33), **caractérisé en ce que** des dispositifs de retenue (37) avec des leviers de retenue (40) sont disposés pour maintenir les lignes électriques (1, 30) sur la plaque de faisceau de câbles (33), de préférence de manière rotative et pouvant être fixés dans la position souhaitée obtenue par rotation.

16. Procédé pour acheminer une ligne électrique d'une station de prélèvement vers au moins une station cible, dans lequel un robot à position variable est prévu avec un outil pour saisir la ligne électrique et dans lequel la ligne électrique est acheminé vers la station cible à l'aide du robot, **caractérisé en ce que**
la ligne électrique est maintenue, transporté et centré dans l'outil de telle sorte qu'elle arrive à la station cible avec une grande précision de positionnement et y soit introduit en partie.

17. Procédé selon la revendication 16, **caractérisé en ce que** la ligne électrique, une fois coupé à longueur, passe de la station de prélèvement à un dispositif de maintien et de transport de l'outil et à un dispositif de centrage de l'outil.

18. Procédé selon la revendication 17, **caractérisé en ce que**
• la ligne électrique est déplacé avec le robot vers la station cible,
• la ligne électrique est transporté à l'intérieur de l'outil dans une direction indiquant la station cible,
• la ligne électrique est centré dans le dispositif de centrage de telle sorte que la première extrémité de la ligne électrique soit orientée avec précision vers la station cible,
• que le dispositif de maintien et de transport de l'outil transporte ensuite la ligne électrique avec la première extrémité vers la station cible dans une direction orientée vers la station cible (avance),
• qu'une modification est effectuée sur la première extrémité de la ligne dans la station cible, en particulier une station de dénudage ou une station de sertissage, en particulier le dénudage ou l'assemblage avec un composant de contact, et
• qu'ensuite, le dispositif de maintien et de transport de l'outil transporte la ligne électrique avec la première extrémité hors de la station cible dans une direction s'éloignant de la station cible (retour).

19. Procédé selon la revendication 18, **caractérisé en ce que**, pour effectuer une modification à la deuxième extrémité de la ligne électrique, l'outil est tourné autour d'un axe de manière à ce que la deuxième extrémité de la ligne électrique arrive à la station cible et soit soumise aux mêmes étapes du procédé que la première extrémité de la ligne.
